# EUROPEAN PATENT APPLICATION

(11) **EP 4 804 522 A1**
(43) Date of publication of application: **09.09.2026**
(21) Application number: 25220754.3
(22) Date of filing: 04.12.2025
(51) Int. Cl.: H04N 19/124, H04N 19/154

(54) **BLOCK QUANTIZATION PARAMETER ADAPTATION SYSTEM**

(30) Priority: 03.03.2025 US 202519068348
(71) Applicant: INTEL Corporation, Santa Clara, CA 95054 (US)
(72) Inventor: SUN, Minzhi, Bellevue, 98006 (US); ZHANG, Ximin, San Jose, 95129 (US); CHIU, Yi-Jen, San Jose, 95129 (US)
(74) Representative: Viering, Jentschura & Partner mbB Patent- und Rechtsanwälte

(57) **Abstract**

In video compression, the quantization parameter (QP) determines the compression level and bitrate of videos. Block-level QP adaptation can improve video encode efficiency, but determining suitable QPs at the block-level without incurring significant overhead is not trivial. To address this concern, QP adaptation at a QP unit having one or more blocks can be performed using one or more filtering distortion values which are already calculated for the one or more blocks by a motion compensated temporal filter (MCTF). One or more minimal distortion values are used in calculating a distortion metric, which is then used for determining the quantization parameter to be applied to a QP unit. The one or more minimal distortion values are also used for determining a size of the QP unit. Different thresholds may be applied to the distortion metric, depending on whether MCTF is on or off.

## Description

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates an exemplary encoder and pre-processing of video frames, according to some embodiments of the disclosure.
FIG. 5 illustrates a motion compensated temporal filter and an exemplary block quantization parameter adaptation system, according to some embodiments of the disclosure.
FIG. 6 illustrates adaptive dQP block size selection, according to some embodiments of the disclosure.
FIG. 7 is a flow diagram illustrating a method for determining a quantization parameter to be applied to a quantization parameter unit, according to some embodiments of the disclosure.
FIG. 8 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. Frames having larger frame indices or which are associated with later timestamps relative to a current frame may be considered frames in the forward direction relative to the current frame. Frames having smaller frame indices or which are associated with previous timestamps relative to a current frame may be considered frames in the backward direction relative to the current frame. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably.

There are several frame types of picture types. I-frames or intra-frames may be least compressible and do not depend on other frames to decode. I-frames may include scene change frames. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as inter-frames. The order or encoding hierarchy in which I-frames, P-frames, and B-frames are arranged may be referred to as a group of pictures (GOP). In some cases, a frame may be an instantaneous decoder refresh (IDR) frame within a GOP. An IDR-frame can indicate that no frame after the IDR-frame can reference any frame before the IDR-frame. Therefore, an IDR-frame may signal to a decoder that the decoder may clear the decoded picture buffer. Every IDR-frame may be an I-frame, but an I-frame may or may not be an IDR-frame. A closed GOP may begin with an IDR-frame. A slice may be a spatially distinct region of a frame that is encoded separately from any other region in the same frame.

In some cases, a frame may be partitioned into one or more blocks. Blocks may be used for block-based compression. The blocks of pixels resulting from partitioning may be referred to as partitions. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs) or macroblocks. A CTU can be 32x32 pixels, 64x64 pixels, 128x128 pixels, or larger in size. A macroblock can be between 8x8 pixels and 16x16 pixels in size. A CTU or macroblock may be divided (separately for luma and chroma components) into coding units (CUs) or smaller blocks, e.g., according to a tree structure. A CU, or a smaller block can have a size of 64x64 pixels, 32x32 pixels, 16x16 pixels, 8x8 pixels, or 4x4 pixels.

In video compression, the quantization parameter (QP) determines the compression level and bitrate of videos. Frame-level QP adaptation can assign different QP values to different frames for bitrate control and compression efficiency. However, regions or blocks inside one video frame may be very different in spatial or temporal domain. For example, some blocks include finer textures and details while other blocks are quite flat and smooth. Some blocks may not have visual activities across many frames, but other blocks may have fast motions. Using the same QP for all blocks inside a frame is not optimal.

Block-level QP adjustment or adaptation is a technique that assigns different QP offsets, or different delta QPs to different blocks in video encoding. With block-level QP adaptation, video encode efficiency could be further improved to better adapt to spatial and temporal characteristics of video contents. Block-level QP adaptation can improve video encode efficiency, but determining suitable QPs at the block-level without incurring significant overhead is not trivial. In one block-level QP adaptation solution, a look ahead algorithm estimates the amount of information that each macroblock contributes to the prediction of future frames and adjust QP of each macroblock based on its contribution. Similarly, a similar block-level QP adaptation solution, a look ahead algorithm estimates the amount of information that each CU contributes to predictions of subsequent CUs. Both solutions are implemented in look ahead encode processing and number of frames looking ahead usually is at least number of frames in two seconds (e.g., 60 frames), which means high compute complexity and long encode latency. In another solution, an algorithm called Block Importance Mapping (BIM) estimates how likely the block samples are to be used as references in encoding of nearby pictures and adjusts block QPs accordingly. This BIM algorithm does not need look ahead processing and utilizes metrics calculated by GOP-based motion compensation temporal filter (MCTF), making it a lightweight and low latency solution. However, this BIM algorithm does not fully utilize the available metrics from MCTF and has a small range of QP offsets or delta QPs, which lower the encode quality gain. In addition, all these solutions use a fixed block size for all frames in a video sequence and do not adapt the block size to varying characteristics in different frames.

To address one or more of these concerns, QP adaptation at a QP unit (or dQP block) having one or more blocks can be performed using one or more filtering distortion values which are already calculated for the one or more blocks by MCTF. Instead of considering only the filtering distortion values associated with a temporal/frame distance of ±1 and ± 2 to the current block only (and other values are ignored and discarded), all available filtering distortion values, such as values associated with a temporal/frame distance of ±1, ±2, ±3, and ±4 to the current block, are considered. Considering additional filtering distortion values means that more information is taken into account when assessing the importance of a block in the encoding process. Considering more information can be beneficial because hierarchical GOP structures often involve using more than 2 reference frames in the forward direction and in the backward direction.

One or more minimal distortion values are used in calculating a distortion metric, which is then used for determining the quantization parameter to be applied to a QP unit. In particular, one or more minimal distortion values are determined by considering the available filtering distortion values. In some embodiments, the one or more minimal distortion values comprise one or more of a forward minimal distortion value, a further forward minimal distortion value, a backward minimal distortion value, and a further backward minimal distortion value. The forward minimal distortion value can be a lowest filtering distortion value of the one or more filtering distortion values calculated for the block in a forward direction. The further forward minimal distortion value can be a second lowest filtering distortion value of the one or more filtering distortion values calculated for the block in the forward direction. The backward minimal distortion value can be a lowest filtering distortion value of the one or more filtering distortion values calculated for the block in a backward direction. The further backward minimal distortion value can be a second lowest filtering distortion value of the one or more filtering distortion values calculated for the block in the backward direction.

A subset of the one or more minimal distortion values can be used to calculate a distortion metric. In particular, a minimum of the subset of the one or more minimal distortion values can be used to calculate a distortion metric. The subset can include one or more of the forward minimal distortion value and the backward minimal distortion value. The minimums determined for one or more blocks of a QP unit can be averaged and used as the distortion metric

A further subset of the one or more minimal distortion values can be used to calculate a distortion metric. In particular, a further minimum of the further subset of the one or more minimal distortion values can be used to calculate a further distortion metric. The further subset can include one or more of the further forward minimal distortion value and the further backward minimal distortion value. The further minimums determined for one or more blocks of a QP unit can be averaged and used as the further distortion metric.

A QP, e.g., a delta QP or a QP offset, to be applied to a QP unit having one or more blocks can be determined based on the distortion metric and the further distortion metric. A combined distortion metric for the QP unit can be determined based on the distortion metric and the further distortion metric. The QP for the QP unit can be determined based on the combined distortion metric.

In some implementations, the look up table having different ranges of the combined distortion metric and corresponding QPs (e.g., delta QP or QP offset from a chosen/selected QP value) can be used to determine the QP based on the combined distortion metric. The combined distortion metric calculated for a QP unit can be compared to one or more thresholds, which correspond to different QPs to be used for the QP unit.

Herein, a QP unit (or a dQP block) denotes a unit of QP adaptation and can include one or more blocks where the QP (e.g., delta QP or QP offset) can vary from one QP unit to another (but the QP (e.g., delta QP or QP offset) for one or more blocks in the QP unit are the same). A QP unit can include a number of 8x8 pixel blocks. As an illustration, a QP unit can include (but are not limited to these examples) 64 8x8 pixel blocks (or 64x64 pixels), 16 8x8 pixel blocks (or 32x32 pixels), 4 8x8 pixel blocks (or 16x16 pixels), or 1 8x8 pixels block. Other solutions may be limited in adapting QP to a fixed QP unit size, and does not adapt to different spatial and temporal characteristics of the pixels in the QP unit. To alleviate this issue, the QP adaptation system can adjust the size of the QP unit based on characteristics of the blocks within a CTU or a macroblock. The characteristics of the blocks can be inferred based on the filtering distortion values already calculated by the MCTF. In some embodiments, the one or more minimal distortion values are also used for determining a size of the QP unit, e.g., the number of blocks in the QP unit or the number of pixels in the QP unit. In some embodiments, an average can be determined based on the one or more minimal distortion values. For example, an average can be determined based on the subset of the one or more minimal distortion values, e.g., the forward minimal distortion value and the backward minimal distortion value. A variance of the averages determined for the blocks of a CTU or a macroblock can be determined. The size of the QP unit can be determined using the variance, such as comparing the variance against one or more thresholds corresponding to different possible sizes of the QP unit.

In certain situations, applying the same look up table when MCTF is on or off is not optimal for encoder performance. MCTF is applied to frames before the encoding process, and QP is applied in the encoding process. Even though the calculation of the distortion metrics is the same, applying the same QP determined for the QP unit may have a different impact on frames which have been processed by the MCTF versus on frames which have not been processed by MCTF. To address this concern, different thresholds may be applied to the distortion metric, depending on whether MCTF is on or off. Phrased differently, the thresholds can be determined based on whether MCTF is on or off. In the case that MCTF is on, because the current frame is filtered with neighboring frames, the correlation between frames can be bigger than in the case where MCTF is off. More aggressive adjustment of QP can be applied (thresholds can be lower for causing a larger QP adjustment) when MCTF is on to account for the correlation.

To further improve upon block-level QP adaptation systems, more than four thresholds are used to determine different QPs based on the combined distortion metric. A larger number of thresholds and corresponding delta QPs can be used to enable a wider range of QP adaptation. In one example, eight thresholds with a delta QP range of [-4, +4] is used in a look up table for determining the QP for a QP unit.

In some experiments run on a variety of content types (e.g., natural, screen, dark, different resolutions, high noise level, clean or low noise level, high motion, video conference, rich texture, etc.), significant subjective and objective quality gains (in the range of 1%-4.5%) relative to other block-level QP adaptation solutions are consistently observed using the features described herein. The solution is agnostic to the codec and can be applied before any encoder to improve encoder efficiency. Techniques for block-level QP adaptation described and illustrated herein may be applied to a variety of codecs, such as AVC (Advanced Video Coding), HEVC (High Efficiency Video Coding), AV1 (AOMedia Video 1), VVC (Versatile Video Coding), and VP9. AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. VVC, also known as "ITU-T H.266", was finalized in 2020. VP9 is an open video codec which became available on 2013-06-17.

### Video compression

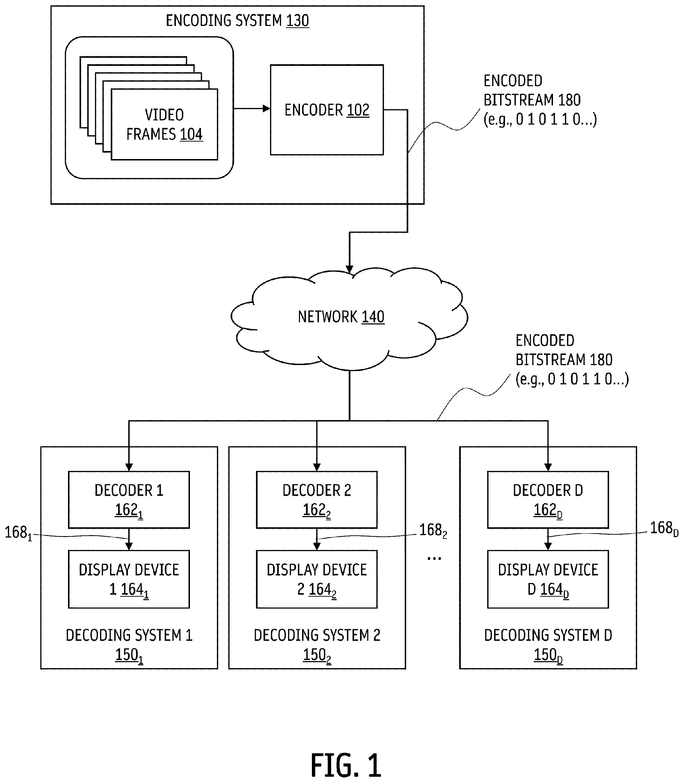

FIG. 1 illustrates encoding system 130 and one or more decoding systems 150_{1...D}, according to some embodiments of the disclosure.

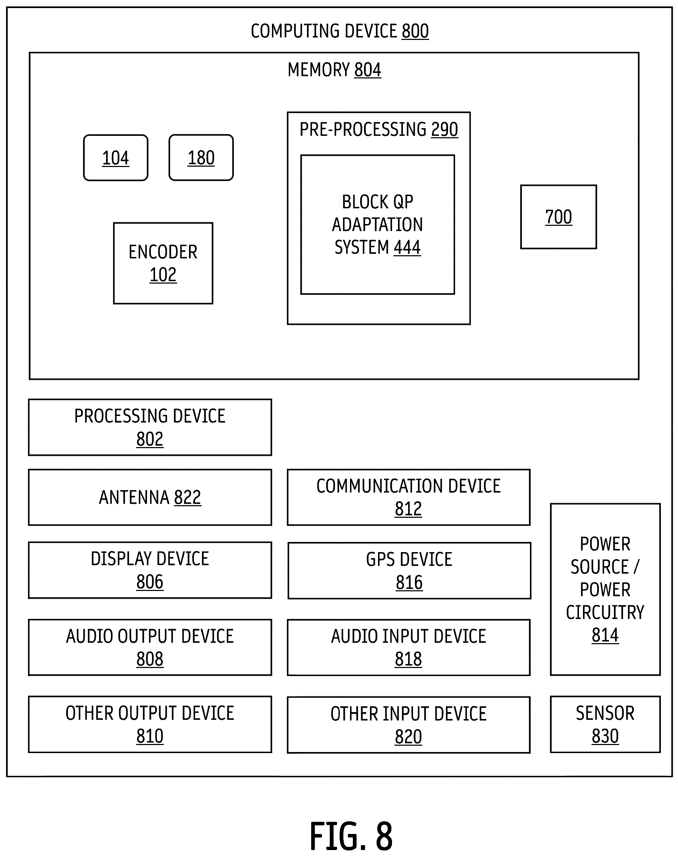

Encoding system 130 may be implemented on computing device 800 of FIG. 8. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

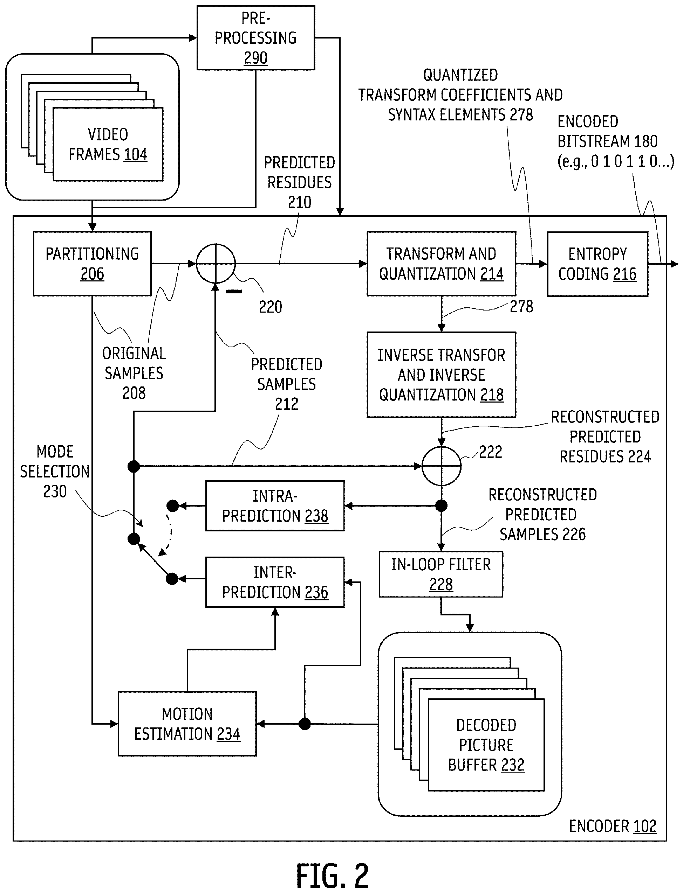

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

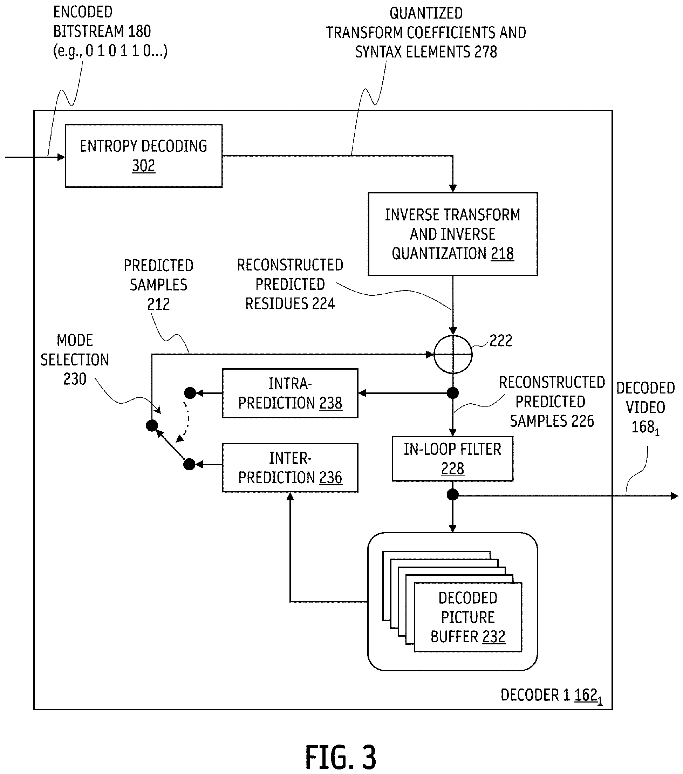

D number of decoding systems 150_{1...D} are illustrated. At least one of the decoding systems 150_{1...D} may be implemented on computing device 800 of FIG. 8. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1164₁ may output the decoded video 168₁ for display to one or more human viewers or users of decoding system 1150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

### Video encoder

FIG. 2 illustrates encoder 102 to encode video frames 104 and output an encoded bitstream, according to some embodiments of the disclosure. Encoder 102 may include one or more of: signal processing operations and data processing operations, including inter and intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encodes video frames 104 into encoded bitstream 180. Encoder 102 may include one or more of partitioning 206, transform and quantization 214, inverse transform and inverse quantization 218, in-loop filter 228, motion estimation 234, inter-prediction 236, intra-prediction 238, and entropy coding 216.

In some embodiments, video frames 104 may be processed by pre-processing 290 before encoder 102 applies an encoding process. Pre-processing 290 and encoder 102 may form encoding system 130 as seen in FIG. 1. Pre-processing 290 may analyze video frames 104 to determine picture statistics that may be used to inform one or more encoding processes to be performed by one or more components in encoder 102. Pre-processing 290 may determine information that may be used for QP adaptation, scene cut detection, and frame type adaptation. Pre-processing 290 may determine for each frame, a recommended frame type. Pre-processing 290 may apply MCTF to denoise video frames 104. Filtered versions of video frames 104 with MCTF applied may be provided to encoder 102 as the input video frames (instead of video frames 104), e.g., to partitioning 206. MCTF may include a motion estimation analysis operation and a bilateral filtering operation. MCTF may attenuate random picture components in a motion aware fashion to improve coding efficiency. MCTF may operate on blocks of 8x8 pixels, or 16x16 pixels. MCTF may operate separately on luminance values and chroma values. MCTF may be applied in three dimensions (e.g., spatial directions and a temporal direction). MCTF may produce a noise estimate of various blocks. In some embodiments, one or more operations of pre-processing 290 may be implemented as software instructions being executed by a processor. In some embodiments, one or more operations of pre-processing 290 may be implemented using computing circuitry designed to perform the one or more operations in hardware.

Partitioning 206 may divide a frame in video frames 104 (or filtered version of video frames 104 from pre-processing 290) into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. In some cases, a frame may be partitioned by partitioning 206 into blocks of 32x32 or 16x16 pixels. Large blocks may be referred to as superblocks, macroblocks, or CTUs. Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

In VVC, a frame in video frames 104 may be partitioned into a plurality of nonoverlapping CTUs. A CTU have a specified size, such as 128x128 pixels, or 64x64 pixels. The CTU can be recursively split into smaller blocks or partitions using different types of partitioning shapes. A CTU may be partitioned using a quadtree partitioning structure into 4 CUs. One or more of the CUs obtained through the quadtree partitioning structure can be recursively divided (e.g., up to three times) into smaller CUs using one of the multi-type structures, including, e.g., a quadtree, a binary tree, or ternary tree structure to support non-square partitions. A quadtree partitioning structure can partition a CU into 4 CUs. A binary tree partitioning structure can partition a CU into 2 CUs (e.g., divided horizontally or vertically). A ternary tree structure can partition a CU into 3 CUs (e.g., divided horizontally or vertically). A smallest CU (e.g., referred to as a block or a partition) may have a size of 4x4 pixels. CUs may be larger than 4x4 pixels. It can be appreciated that a CTU may be partitioned into CUs through many different feasible partition combinations. A CTU may be partitioned in many different ways, resulting in many different partitioned results.

In some cases, one or more operations in partitioning 206 may be implemented in intra-prediction 238 and/or inter-prediction 236.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, intra-prediction 238 may support a number of diverse predictors, e.g., 56 different predictors. In one codec, intra-prediction 238 may support a number of diverse predictors, e.g., 95 different predictors. Some predictors, e.g., directional predictors, may capture different spatial redundancies in directional textures. Pixel values of a block can be predicted using a directional predictor in intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, IBC, color palette or palette coding, multiple-reference line, intra sub-partition, matrix-based intra-prediction (matrix coefficients may be defined by offline training using neural networks), angular prediction, wide-angle prediction, cross-component linear model, template matching, etc. IBC works by copying a reference block within the same frame to predict a current block. Palette coding or palette mode works by using a color palette having a few colors (e.g., 2-8 colors), and encoding a current block using indices to the color palette. In some cases, intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and inter-prediction 236 may predict samples of a block from samples of previously encoded frames, e.g., reference frames in decoded picture buffer 232. Motion estimation 234 and inter-prediction 236 may perform operations to make inter-prediction decisions or inter-prediction decisions. Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for inter-prediction 236. Motion estimation 234 may implement compound reference frame prediction mode where two reference frames with two corresponding motion predictors are used for inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound inter-intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and inter-prediction 236 and optionally applying an interpolation filter. In some cases, inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether inter-prediction 236 or intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from inter-prediction 236 and/or intra-prediction 238.

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the intra-prediction 238 and inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transform (DCT), asymmetrical discrete sine transform (ADST), flip ADST, and identity transform (IDTX), multiple transform selection, low-frequency non-separatable transform, subblock transform, non-square transforms, DCT-VIII, discrete sine transform VII (DST-VII), discrete wavelet transform (DWT), etc. Transforming may convert the predicted residues 210 into transform coefficients. Quantizing may quantize the transformed coefficients, e.g., by reducing the precision of the transform coefficients. Quantizing may include using quantization matrices (e.g., linear and non-linear quantization matrices) having quantization parameters. The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element (e.g., a quantization parameter) in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. Transform and quantization 214 may output quantized transform coefficients and syntax elements 278 that indicate the coding modes and parameters used in the encoding process implemented in encoder 102.

Herein, a QP refers to a parameter in video encoding that controls the level of compression by determining how much detail is preserved or discarded during the encoding process. QP can range from 0 to 51, where lower values maintain higher quality but result in larger file sizes, while higher values increase compression but introduce more visual artifacts. The QP value directly influences how the DCT coefficients are divided and rounded in transform and quantization 214. Larger QP values cause more aggressive rounding, effectively removing high-frequency details that are less perceptible to human vision. This parameter is used in the rate-distortion optimization process of the encoder, allowing encoders to balance visual quality against bandwidth constraints. Modern encoders can dynamically adjust QP values at both frame and macroblock levels to optimize compression based on scene complexity and motion. In some cases, the adjustment to the QP is made to a base QP using a delta QP or a QP offset. Delta QP (or QP offset) is a mechanism in video encoding that allows for relative adjustments to the base QP value for specific coding units or frame types. These offsets enable transform and quantization 214 to apply different levels of compression to different parts of the video stream, optimizing the balance between quality and bitrate. For example, B-frames typically use higher QP values (positive delta) compared to I-frames since they're less critical for overall quality, while regions of high visual importance might receive negative delta QPs to preserve more detail. In many encoders, delta QPs can be configured for various structural elements like slice types, hierarchical coding layers, or specific regions of interest within frames. This granular control over quantization helps achieve better subjective quality by allocating more bits to visually significant content while maintaining efficient compression for less noticeable areas.

In some embodiments, the QPs used by transform and quantization 214 are determined by pre-processing 290. Pre-processing 290 may produce one or more quantization parameters to be used by transform and quantization 214. Determining optimal QPs is not trivial, since QPs can directly impact encoder performance.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, inter-prediction 236, and intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, inter and intra-prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, inter-prediction 236, and intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, intra-prediction 238, inter-prediction 236, and in-loop filter 228.

Depending on the prediction modes signaled in the encoded bitstream 180 (e.g., as syntax elements in quantized transform coefficients and syntax elements 278), intra-prediction 238 or inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For intra-prediction 238, the decoded reference block may be in the same frame as the block that is being decoded or reconstructed. For inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video 168₁.

### Encoding system with improved block-level QP adaptation

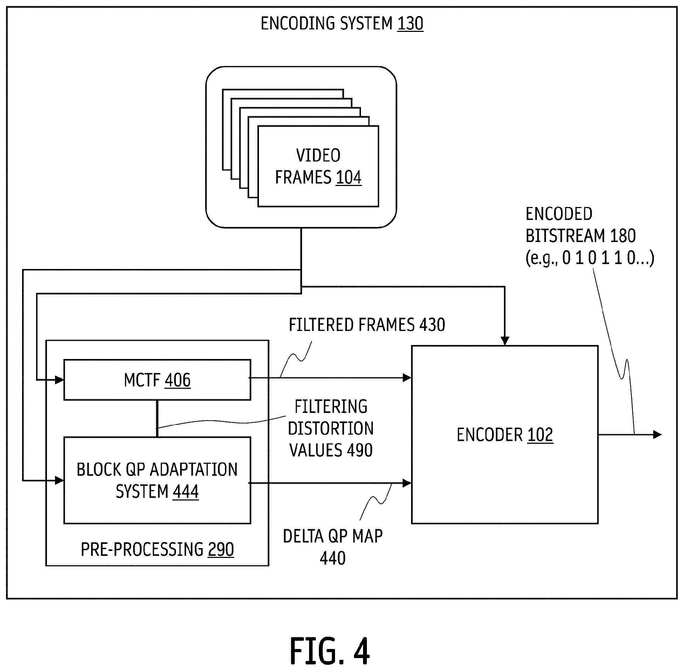

To improve upon other block-level QP adaptation systems, FIGS. 4-7 illustrate an algorithm and variations thereof that can improve encoder performance and adds little overhead to the encoding process.

FIG. 4 illustrates encoder 102 and pre-processing 290 of video frames, according to some embodiments of the disclosure. In some embodiments, MCTF 406 and block QP adaptation system 444 may be included in pre-processing 290 before encoder 102. Encoder 102 and block QP adaptation system 444 may form encoding system 130.

Video frames 104 may be provided to MCTF 406. MCTF 406 may generate filtered frames 430 and provide filtered frames 430 to encoder 102. MCTF 406 may receive video frames 104 and analyze consecutive frames to detect and quantify motion between frames. MCTF 406 may generate motion vectors that describe detected movement of objects. Motion vectors can be generated by first estimating motion between consecutive frames using block matching or optical flow algorithms to track how objects move through the scene. MCTF 406 may align 8x8 pixel blocks from neighboring frames based on the generated motion vectors. MCTF 406 may apply temporal filtering to the aligned 8x8 pixel blocks to reduce noise while preserving motion integrity and produce filtered frames 430. Temporal filtering can effectively average corresponding pixels across time while accounting for movement. MCTF 406 can reduce noise and artifacts while preserving image quality by utilizing information from multiple frames.

Video frames 104 may be provided to block QP adaptation system 444. One or more filtering distortion values 490 may be provided to block QP adaptation system 444. Block QP adaptation system 444 may determine one or more quantization parameters (e.g., one or more delta QPs or QP offsets) to be applied to one or more blocks of a frame, as part of delta QP map 440. Block QP adaptation system 444 may determine one or more quantization parameters based on one or more filtering distortion values 490. Delta QP map 440 may include one or more delta QP values to be applied to one or more blocks of a frame. Delta QP map 440 may be provided as input to encoder 102. For example, delta QP map 440 may be used by transform and quantization 214 of FIG. 2).

MCTF 406, e.g., implementing a GOP-based temporal filter, or a filter that is applied to lower GOP layers, e.g., every 8^{th} frame for Random Access GOP size 8 encoding, can calculate statistics about the motion compensated blocks. The statistics can be used as a proxy for estimating an importance of a block, such as the likelihood that a block will be used as a reference in inter-prediction 236 and motion estimation 234 of FIG. 2 for other frames. The QP can be lowered for important blocks to increase the quality of the important blocks. The QP can be increased for unimportant blocks to decrease the quality of the unimportant blocks (or reduce the number of encoded bits). In some embodiments, MCTF 406 can determine one or more filtering distortion values 490 for one or more reference pictures of a GOP-based temporal filter for a given 8x8 pixel block after motion compensation for the 8x8 pixel block is done. One or more filtering distortion values 490 may include metrics that measure the accuracy or error of the motion compensation of the given 8x8 pixel block. Herein, one or more filtering distortion values 490 may be referred to as one or more E metrics.

Video frames 104 may also be provided to encoder 102 (e.g., if MCTF 406 is off or bypassed).

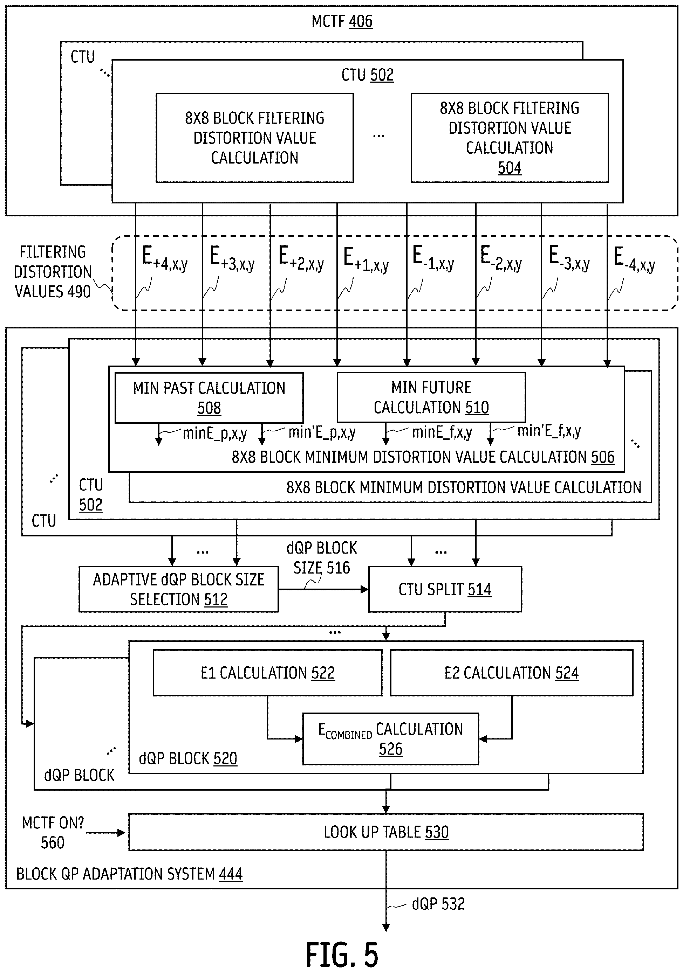

FIG. 5 illustrates MCTF 406 and block QP adaptation system 444, according to some embodiments of the disclosure.

MCTF 406 may process individual CTUs (or macroblocks), such as CTU 502. A CTU may include a number of 8x8 pixel blocks, such as 64 8x8 pixel blocks. In some implementations, MCTF 406 may apply filtering at the block-level (e.g., at the 8x8 pixel block-level), and calculate one or more filtering distortion values 490, or one or more E metrics for individual blocks of a CTU, such as CTU 502. The block-level filtering distortion values for the blocks may be determined by respective filtering distortion value calculations, such as 8x8 block filtering distortion value calculation 504. For a given block of a CTU, one or more filtering distortion values 490 *E_{d,x,y}* can be calculated based on a motion compensated block and relative to each neighboring/reference frames at various distances. "d" denotes a temporal/frame distance to the current block. In some implementations, "d" can have the following temporal/frame distances, [+4, +3, +2, +1, -1, -2, -3, -4]. "x,y" denotes the indices of the current block within the CTU.

The filtering distortion values 490 (*E_{d,x,y}*) calculated by 8x8 block filtering distortion value calculation 504 in MCTF 406 can serve as a proxy or heuristic for assessing the importance of a given block. *E_{d,x,y}* can be calculated for each 8x8 luma block after motion compensation according to the following: ${E}_{d , x , y} = 0.2 ⋅ \frac{{SSD}_{d , x , y} + 5}{{V}_{x , y}} + \frac{{SSD}_{d , x , y}}{{s}^{2} ⋅ 50}$

The Sum of Squared Differences (*SSD_{d,x,y}*) represents a sum of the squared differences of the pixel values between the given block at x,y in the current frame and the motion compensated block in the neighboring/reference frame at temporal/frame distance d. *V_{x,y}* is the variance of the current luma block. *s* is the size of the block. In some implementations, the block size of MCTF 406 is fixed at 8x8, s is always equal to 8. Equation 1 can produce a low filtering distortion value *E_{d,x,y}* value, indicating high block importance, to blocks that have a low *SSD_{d,x,y}* value, as well as a low relative error (e.g., *SSD_{d,x,y}*/*V_{x,y},* or SSD over variance).

For a given block (e.g., a 8x8 pixel block), the following filtering distortion values 490 (*E_{d,x,y}*) may be calculated: *E*_{*+*4}*_{,x,y}, E*_{*+*3}*_{,x,y}, E*₊₂*_{,x,y}, E*₊₁*_{,x,y}, E*_{*-*1,}*_{x,y}. E_{-2,x,y}, E*_{*-*3}*_{,x,y},* and *E*_{*-*4}*_{,x,y}.* 8x8 block filtering distortion value calculation 504 determines the one or more filtering distortion values 490 (*E_{d,x,y}*) for the block based on a sum of squared difference between the block and a motion compensated block and a variance of the block. 8x8 block filtering distortion value calculation 504 determines filtering distortion values 490 at various temporal/frame distances: ±1, ±2, ±3, and ±4. The filtering distortion values 490 are determined for the block by MCTF 406.

In some implementations, adaptive QP can operate at a CTU (or macroblock) level to set different QPs to different CTUs (and the same QP for all blocks within a given CTU). For a given CTU, the filtering distortion values 490 (*E_{d,x,y}*) for the various blocks of the CTU can be aggregated to form a CTU-level (or macroblock-level) combined distortion metric *E_{combined,i}.* "i" denotes an index of the CTU within a frame. The macroblock-level combined distortion metric can be used *E_{combined,i}* to determine a quantization parameter (e.g., a delta QP or a QP offset) to be applied to the CTU or macroblock.

At the CTU-level, a distortion metric *E*1*ᵢ* and a further distortion metric *E*2*ᵢ* can be determined that takes filtering distortion values at different temporal/frame distances and for the different blocks in the CTU into account.

Referring briefly to one solution with potentially less than ideal encoder performance, a distortion metric *E*1*ᵢ* and a further distortion metric *E*2*ᵢ* can be calculated as follows: $E {1}_{i} = \frac{{\sum }_{d = \pm 1 , \left(x, y\right) ϵ {CTU}_{i}} {E}_{d , x , y}}{N}$ $E {2}_{i} = \frac{{\sum }_{d = \pm 2 , \left(x, y\right) ϵ {CTU}_{i}} {E}_{d , x , y}}{N}$

N is the number of filtering distortion values that is summed. Phrased differently, the distortion metric *E*1*ᵢ* averages the filtering distortion values *E_{d,x,y}* at d=±1 over all the 8x8 blocks in the CTU. The further distortion metric *E*2*ᵢ* averages the filtering distortion values *E_{d,x,y}* at d= ±2 over all the 8x8 blocks in the CTU. The distortion metric *E*1*ᵢ* and the further distortion metric *E*2*ᵢ* thus take into account and averages the filtering distortion values at temporal/frame distance = ±1 and at temporal/frame distance = ±2 respectively. The distortion metric *E*1*ᵢ* and the further distortion metric *E*2*ᵢ* can be combined to form distortion metric *E_{combined_i}* as follows: ${E}_{combined , i} = max \left(E{1}_{i},E{2}_{i}\right) + 3 ⋅ abs \left(E{2}_{i}-E{1}_{i}\right)$

In some circumstances, for CTU in a frame that is at a highest temporal layer that is filtered, the distortion metric *E_{combined}* as follows: ${E}_{combined} = 0.6 ⋅ {E}_{combined} + 0.4 ⋅ {C}_{center}$

*C_{center}* is a middle point of the range of values for the combined distortion metric *E_{combined,i}* (e.g., 45). Equation 5 adjusts *E_{combined}* for frames not in base layer of encode GOP hierarchical structure.

A quantization parameter, e.g., delta QP or QP offset, can be obtained using a look up a table with *E_{combined,i}.* An exemplary look up table is as follows:

**Table 1: Exemplary delta QP look up table associating different ranges of E_{combined,i} to different delta QP values**

| *E_{combined,i}* | Delta QP |
|---|---|
| 0-14 | -2 |
| 15-29 | -1 |
| 30-60 | 0 |
| 61-75 | +1 |
| > 75 | +2 |

In this non-ideal solution, there are one or more shortcomings. When calculating *E*1*ᵢ* and *E*2*ᵢ* according to equation 2 and equation 3, the averaging operation is done with only filtering distortion values from the neighbor compensated frames whose absolute value of temporal/frame distance is 1 and 2 respectively. In each direction (past or future; forward direction or backward direction), only information from two reference frames is used for each 8x8 pixel block during the calculation *E*1*ᵢ* and *E*2*ᵢ* regardless how many reference frames are available. Information of other reference frames at an absolute value temporal/frame distance greater than 2 is ignored and discarded, even though the information is available. The determination of the quantization parameter based on *E*1*ᵢ* and *E*2*ᵢ* thus does not take all the available information into account. In addition, the range of delta QP in the look up table of Table 1 is limited to [-2, +2].

To address at least one of these shortcomings, block QP adaptation system 444 includes one or more of the following aspects: (1) modified calculation for *E*1*ᵢ* and *E*2*ᵢ*, (2) adaptive QP unit size (or dQP block size) selection, and (3) modified look up tables for determining delta QP. Including any one or more of the aspects can offer a block-level QP adaptation system that can better adapt to various video contents and further improve encode efficiency.

Rather than using equation 2 and equation 3, which considers only information from reference frames at an absolute temporal/frame distance of 1 and 2, all available information of reference frames, including information about reference frames at an absolute temporal/frame distance greater than 2, are considered when calculating *E*1*ᵢ* and *E*2*ᵢ*. The information is already calculated by MCTF 406 and does not add additional overhead to consider the information. Moreover, minimal distortion values are considered, because those reference frames at the temporal/frame distances with minimal distortion values are most likely to get chosen for motion prediction in the encoding process. Minimal distortion values can be used as a strong signal for block importance. Since the goal of a block-level QP adaptation solution is to estimate how likely a block will be used as reference when encoding nearby frames, it is not optimal to only consider one or two neighbor frames in each direction when calculating *E*1*ᵢ* and *E*2*ᵢ*.

For simplicity, the following description for calculating *E*1*ᵢ* and *E*2*ᵢ* assumes that the QP unit size or the dQP block size is the CTU size or the macroblock size (e.g., a minimal size of blocks or a base unit that can have a different delta QP value or QP offset value from other base units). When calculating *E*1*ᵢ* and *E*2*ᵢ*, instead of only using the filtering distortion values *E_{d,x,y}* from the closest reference frames (d= ±1, ±2), for each 8x8 block, in one direction, one or more minimal filtering distortion values among all reference frames in the same direction are used.

Block QP adaptation system 444 may perform processing for individual CTUs, such as CTU 502. For CTU 502, block-level minimal distortion values for the blocks may be determined by respective minimum distortion calculations, such as 8x8 block minimum distortion value calculation 506. 8x8 block minimum distortion value calculation 506 may determine one or more minimal distortion values for a block based on one or more filtering distortion values calculated for a block of a video frame (e.g., at varying temporal/frame distances, such as d= ±1, ±2, ±3, and ±4).

In some embodiments, min future calculation 510 may determine one or more forward minimal distortion values, e.g., a forward minimal distortion value or *minE_f, x, y* and a further forward minimal distortion value or *min'E_f, x, y,* for each 8x8 block. Min future calculation 510 may set a lowest filtering distortion value of the one or more filtering distortion values calculated for the block in a forward direction as the forward minimal distortion value or *minE_f, x, y.* Min future calculation 510 may set a second lowest filtering distortion value of the one or more filtering distortion values calculated for the block in the forward direction as the further forward minimal distortion value or *min'E_f, x, y.* Min future calculation 510 may output two lowest filtering distortion values (a forward minimal distortion value or *minE_f, x, y* and a further forward minimal distortion value or *min'E_f, x,* y) of the filtering distortion values calculated for reference frames in the forward direction (where d is positive), e.g., the set of filtering distortion values: *E*_{*+*4}*_{,x,y}, E*_{*+*3}*_{,x,y}, E_{+2,x,y},* and *E*_{*+*1}*_{,x,y}.*

In some embodiments, min past calculation 508 may determine a one or more backward minimal distortion values, e.g., a backward minimal distortion value or *minE_p, x, y* and a further backward minimal distortion value or *min'E_p, x, y,* for each 8x8 block. Min past calculation 508 may set a lowest filtering distortion value of the one or more filtering distortion values calculated for the block in a backward direction as the backward minimal distortion value or *minE_p, x, y.* Min past calculation 508 may set a second lowest filtering distortion value of the one or more filtering distortion values calculated for the block in the backward direction as the further forward minimal distortion value or *min'E_p, x, y.* Min past calculation 508 may output two lowest filtering distortion values (a backward minimal distortion value or *minE_p, x, y* and a further backward minimal distortion value or *min'E_p, x, y)* of the filtering distortion values calculated for reference frames in the backward direction (where d is negative), e.g., the set of filtering distortion values: *E*_{*-*4}*_{,x,y}, E*_{*-*3}*_{,x,y}, E*_{*-*2}*_{,x,y},* and *E*_{*-*1}*_{,x,y}.*

Min past calculation 508 can output *minE_p, x, y* and *min'E_p, x, y* for each 8x8 block in the backward direction. Min future calculation 510 can output *minE_f, x, y* and *min'E_f, x, y* for each 8x8 block in the forward direction. The one or more minimal distortion values (e.g., minE_f, x, y, min'E_f, x, y, minE_p, *x, y, and min'E_p, x, y)* produced by min past calculation 508 and min future calculation 510 of 8x8 block minimum distortion value calculation 506 can be used for determining a distortion metric *E*1*ᵢ* and a further distortion metric *E*2*ᵢ*.

For a CTU (or a QP unit or a dQP block), a distortion metric *E*1*ᵢ* and a further distortion metric *E*2*ᵢ* can be calculated as follows: $E {1}_{i} = \frac{{\sum }_{all , \left(x, y\right) ϵ {CTU}_{i}} min \left(minE_p,x,y,minE_f,x,y\right)}{N}$ $E {2}_{i} = \frac{{\sum }_{all , \left(x, y\right) ϵ {CTU}_{i}} min \left(min′E_p,x,y,min′E_f,x,y\right)}{N}$

N is the number of 8x8 blocks in the CTU (or a QP unit or a dQP block), or the number of minimal filtering distortion values that is summed. Phrased differently, the distortion metric *E*1*ᵢ* averages the minimal filtering distortion value (e.g.,
min (*minE_p, x, y, minE_f, x, y))* in either the forward direction or the backward direction (e.g., d<0 or d>0) for a block over all the 8x8 blocks in the CTU. The further distortion metric *E*2*ᵢ* averages the minimal filtering distortion value (e.g., min (*min'E_p, x, y, min'E_f, x, y))* in either the forward direction or the backward direction (e.g., d<0 or d>0) for a block over all the 8x8 blocks in the CTU. The distortion metric *E*1*ᵢ* and the further distortion metric *E*2*ᵢ* thus take into account one or more minimal filtering distortion values from the set of filtering distortion values at all temporal/frame distances (d=±1, ±2, ±3, and ±4). The distortion metric *E*1*ᵢ* and the further distortion metric *E*2*ᵢ* can be combined to form distortion metric *E_{combined_i}* according to equation 4 or equation 5.

In some implementations, equation 6 and equation 7 can have an alternative form: $E {1}_{i} = \frac{{\sum }_{all , \left(x, y\right) ϵ {CTU}_{i}} minE _ p , x , y + minE _ f , x , y}{2 N}$ $E {2}_{i} = \frac{{\sum }_{all , \left(x, y\right) ϵ {CTU}_{i}} mi n ′ E _ p , x , y + min ′ E _ f , x , y}{2 N}$

N is the number of 8x8 blocks in the CTU (or a QP unit or a dQP block). 2N can be the number of minimal filtering distortion values that is summed. Phrased differently, the distortion metric *E*1*ᵢ* averages the minimal filtering distortion values (e.g.,
*minE_p, x, y, and minE_f, x, y*) in both the forward direction and the backward direction (e.g., d<0 and d>0) for (all) the 8x8 blocks in the CTU. The further distortion metric *E*2*ᵢ* averages the minimal filtering distortion values (e.g., *min'E_p, x, y, and min'E_f, x, y)* in both the forward direction and the backward direction (e.g., d<0 and d>0) for (all) the 8x8 blocks in the CTU. The distortion metric *E*1*ᵢ* and the further distortion metric *E*2*ᵢ* thus take into account one or more minimal filtering distortion values from the set of filtering distortion values at all distances (d=±1, ±2, ±3, and ±3). The distortion metric *E*1*ᵢ* and the further distortion metric *E*2*ᵢ* can be combined to form the combined distortion metric *E_{combined_i}* according to equation 4 or equation 5.

The calculations illustrated by equation 6 and equation 7 (or equation 8 and equation 9) can be performed by E1 calculation 522 and E2 calculation 524 respectively to produce the distortion metric *E*1*ᵢ* and the further distortion metric *E*2*ᵢ* respectively. The calculations illustrated by equation 4 and equation 5 can be performed by E_{COMBINED} calculation 526 to produce the combined distortion metric *E_{combined_i}.*

In some embodiments, E1 calculation 522 may determine a distortion metric *E*1*ᵢ* for a QP unit comprising at least the block. The distortion metric *E*1*ᵢ* can be based on a subset of the one or more minimal distortion values. The distortion metric *E*1*ᵢ* can average one or more minimal distortion values determined for the blocks over all the blocks in a CTU (e.g., a QP unit, a dQP block). The subset of the one or more minimal distortion values may include one or more of: the forward minimal distortion value (*minE_f, x,* y) and the backward minimal distortion value (*minE_p, x,* y) determined for the block. In some embodiments, E1 calculation 522 may determine a minimum of the subset of the one or more minimal distortion values for the block (e.g., min (*minE_p, x, y, minE_f, x, y)),* and determine an average of one or more minimums determined for one or more blocks of the CTU (or dQP block) (e.g., as illustrated in equation 6). The one or more minimums includes the minimum determined for the block. In some embodiments, E1 calculation 522 may determine an average of one or more subsets of the one or more minimal distortion values determined for one or more blocks of the quantization parameter unit (e.g., as illustrated in equation 8). The one or more subsets including the subset of the one or more minimal distortion values for the block (e.g., *minE_p, x, y and minE_f, x, y).*

In some embodiments, E1 calculation 522 adds or sums up the smaller one of the forward minimal distortion value and the backward minimal distortion value (the smallest distortion value in either direction) from each 8x8 block and averages over N where N is the number of blocks. In some embodiments, E1 calculation 522 adds or sums up the forward minimal distortion value and the backward minimal distortion value (the smallest distortion value in both directions) from each 8x8 block and averages over 2N where N is the number of blocks.

In some embodiments, E2 calculation 524 may determine a further distortion metric *E*2*ᵢ* for a QP unit comprising at least the block. The further distortion metric *E*2*ᵢ* can be based on a further subset of the one or more minimal distortion values. The further distortion metric *E*2*ᵢ* can average one or more further minimal distortion values determined for the blocks over all the blocks in a CTU (e.g., a QP unit, a dQP block). The further subset of the one or more minimal distortion values may include one or more of: the further forward minimal distortion value (*min'E_f, x,* y) and the further backward minimal distortion value (*min'E_p, x,* y) determined for the block. In some embodiments, E2 calculation 524 may determine a minimum of the further subset of the one or more minimal distortion values for the block (e.g., min (*min'E_p, x,* y, *min'E_f, x, y)),* and determine an average of one or more minimums determined for one or more blocks of the CTU (or dQP block) (e.g., as illustrated in equation 7). The one or more minimums includes the minimum determined for the block. In some embodiments, E2 calculation 524 may determine an average of one or more further subsets of the one or more minimal distortion values determined for one or more blocks of the quantization parameter unit (e.g., as illustrated in equation 9). The one or more further subsets including the further subset of the one or more minimal distortion values for the block (e.g., *min'E_p,* x, y *and min'E_f, x, y).*

In some embodiments, E2 calculation 524 adds or sums up the smaller one of the further forward minimal distortion value and the further backward minimal distortion value (the second smallest distortion value in either direction) from each 8x8 block and averages over N where N is the number of blocks. In some embodiments, E2 calculation 524 adds or sums up the further forward minimal distortion value and the further backward minimal distortion value (the smallest distortion value in both directions) from each 8x8 block and averages over 2N where N is the number of blocks.

In some embodiments, a QP value (or delta QP or QP offset) to be applied to a CTU (or a QP unit or a dQP block) can be determined based on the distortion metric *E*1*ᵢ* and the further distortion metric *E*2*ᵢ*.

E_{COMBINED} calculation 526 produces the combined distortion metric *E_{combined_i}* (according to equation 4 or equation 5), based on the distortion metric *E*1*ᵢ* and the further distortion metric *E*2*ᵢ*. The QP value (or delta QP or QP offset) to be applied to a CTU (or a QP unit or a dQP block) can be determined based on the combined distortion metric *E_{combined_i}.* The combined distortion metric *E_{combined_i}* can be used as an input to look up table 530 to determine a quantization parameter (e.g., dQP 532) based on the combined distortion metric *E_{combined_i}.*

Notably, equation 6, equation 7, equation 8, and equation 9 take into account minimal distortion values among filtering distortion values calculated for all reference frames (e.g., all d), not just the filtering distortion values from just two closest neighboring frames (e.g., d=±1 and ±2). In many scenarios, the number of reference frames in either direction can be greater than 2, especially for frames in the base layer of hierarchical GOP structures. In those scenarios, the number of available filtering distortion values 490 calculated by MCTF 406 are also more than 2 in each direction. Filtering distortion values 490 for all reference frames have already been calculated in MCTF 406 and can be used directly in block QP adaptation system 444 without any extra calculation or overhead.

In one solution, the base unit for adaptive QP is fixed at the CTU size across all frames in a video, which can be inflexible when it comes to adapting to content with different characteristics within a CTU. In some modern codecs (e.g., HEVC onwards), the QP can change at a sub-CTU-level or a quantization group level, where the granularity at which QP modification occurs can be signaled by the encoder in bitstream syntax (e.g., picture header). Leveraging this capability, block QP adaptation system 444 may implement adaptive dQP block size selection to better adapt to various video contents and help to achieve better encoder performance.

Adaptive dQP block size selection 512 and CTU split 514 can be implemented in block QP adaptation system 444 to adjust the QP unit size (or the dQP block size 516) and allow for different QPs (or delta QPs or QP offsets) to be set for different QP units or dQP blocks of varying sizes. Adaptive dQP block size selection 512 may utilize one or more filtering distortion values 490 as input to determine the dQP block size 516. Adaptive dQP block size selection 512 may utilize one or more minimal distortion values calculated by 8x8 block minimum distortion value calculation 506 as input to determine the dQP block size 516.

dQP block size 516 may specify a number of 8x8 blocks in the dQP block or QP unit, e.g., 64, 16, 4, and 1. dQP block size 516 may specify the pixel dimensions of the dQP block or QP unit, e.g., 64x64 pixels, 32x32 pixels, or 16x16 pixels.

CTU split 514 may split a CTU (e.g., CTU 502) into one or more QP units or dQP blocks (depicted as dQP blocks, including dQP block 520) according to dQP block size 516. CTU split 514 may produce one or more one or more QP units or dQP blocks (depicted as dQP blocks, including dQP block 520) having dQP block size 516.

As a result of CTU split 514, E1 calculation 522, E2 calculation 524, and E_{COMBINED} calculation 526 may operate at a dQP block-level as opposed to at the CTU (or macroblock) level (e.g., perform calculations for dQP block 520 instead of for CTU 502). E1 calculation 522 may average over block(s) in a dQP block instead of over block(s) in a CTU (or macroblock). E2 calculation 524 may average over block(s) in a dQP block instead of over block(s) in a CTU (or macroblock).

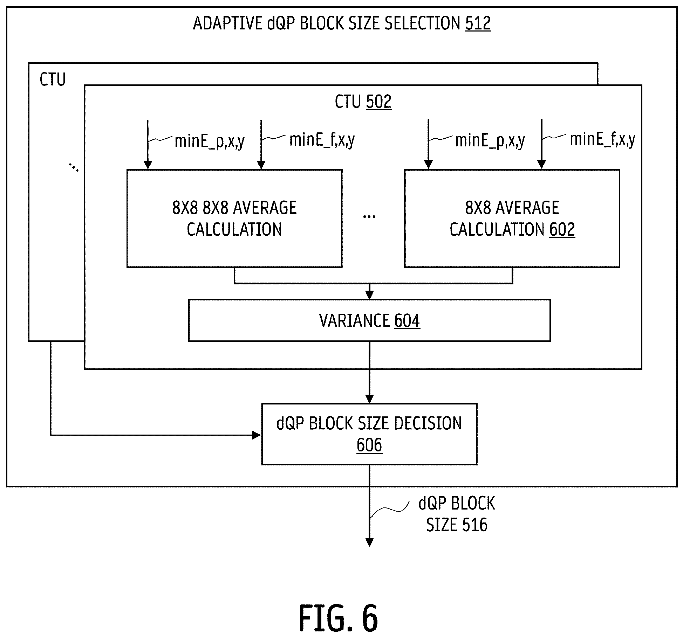

FIG. 6 illustrates adaptive dQP block size selection 512, according to some embodiments of the disclosure. Adaptive dQP block size selection 512 may determine a dQP block size 516 for individual CTUs (e.g., CTU 502). For a given CTU, a block-level average minimal distortion value (*minE, x, y)* for individual block(s) may be determined by respective 8x8 average calculations, such as 8x8 average calculation 602. In some embodiments, 8x8 average calculation 602 may determine an average minimal distortion metric for a block based on the one or more minimal distortion values, such as the subset of the one or more minimal distortion values for the block (e.g., *minE_p, x, y and minE_f, x, y).* In some embodiments, 8x8 average calculation 602 may determine an average (e.g., an average minimal distortion metric minE, *x,* y) for a block based on the one or more minimal distortion values, such including the subset of the one or more minimal distortion values (e.g.,
*minE_p, x, y and minE_f, x, y)* and the further subset of the one or more minimal distortion values (e.g., *min'E_p, x, y and min'E_f,* x, *y).*

Variance 604 may determine a variance of the one or more averages (e.g., one or more average minimal distortion metrics) determined for one or more blocks of a CTU or a macroblock. The one or more averages including the average determined for the block. The variance is fed as input to dQP block size decision 606, which can determine dQP block size 516 suitable for the CTU or macroblock. Variances of all CTUs or macroblocks of a frame can be fed as input to dQP block size decision 606, which can determine dQP block size 516 suitable for the frame.

dQP block size decision 606 may determine the size of the QP unit (e.g., dQP block size 516) based on the variance for the CTU/macroblock, or one or more variances of one or more CTUs/macroblocks of a frame. dQP block size decision 606 may apply logic or one or more rules to the variance or one or more variances of the one or more CTUs/macroblocks to determine dQP block size 516. An exemplary logic or rule may include setting dQP block size 516 to a certain value if more than a proportion of variances is greater than a variance threshold. dQP block size decision 606 may compare the variance or one or more variances against one or more thresholds corresponding to one or more different sizes for the QP unit or different values for dQP block size 516 and determine a value for dQP block size 516 accordingly.

Adaptive dQP block size selection 512 may make a determination for dQP block size 516 by taking into account all the available filtering distortion values for all reference frames, by utilizing the minimal distortion values among the available filtering distortion values for all reference frames. For instance, block-level forward minimal distortion value *minE_p, x, y* and block-level backward minimal distortion value *minE_f, x, y* can be used by adaptive dQP block size selection 512. Considering the minimal distortion values in both directions, the minimal distortion values are averaged in 8x8 average calculation 602 to get one block-level average minimal distortion metric *minE, x,* y. The 2D-variance is calculated by variance 604 on the average minimal distortion metrics *minE, x, y* calculated for one or more blocks of CTU 502 to derive the variance for CTU 502.

Higher variance can mean that dQP block size 516 can be set by adaptive dQP block size selection 512 to be smaller to account for varied characteristics in the CTU or in the frame. Smaller dQP block size 516 can allow for QP to change for smaller dQP blocks, making block QP adaptation system 444 more capable of adapting to the varied content. Lower variance can mean that dQP block size 516 can be set by adaptive dQP block size selection 512 to be bigger to account for consistent characteristics in the CTU or in the frame. Larger dQP block size 516 can allow for QP to change for larger dQP blocks, preventing unnecessary variation in QP when quantizing smooth content.

Block QP adaptation system 444, including adaptive dQP block size selection 512 and CTU split 514, has the ability to switch QP on CTU or a sub-CTU-level (or macroblock or a sub-macroblock-level), e.g., for a given CTU or macroblock, or for a given frame, based on video spatial and temporal characteristics of video contents.

Referring back to FIG. 5, in some scenarios, MCTF 406 may be disabled, not supported, or not applied to generate filtered video frames. Block QP adaptation system 444 may perform calculations according to equation 1 to obtain filtering distortion values 490 for individual blocks. In a solution that uses Table 1 to set the quantization parameter, the maximum adjustment of QPs determined based on E_{COMBINED} (e.g., the delta QP range) is ±2. In addition, Table 1 is agnostic to whether MCTF 406 is on or off (e.g., Table 1 is used as a look up table regardless of whether MCTF 406 is on or off). This approach can have two potential issues. The delta QP range is too small for significant quality improvement for video contents which have static regions or regions as reference in many nearby frames, a typical example is screen contents with some texts static across many neighbor frames. After applying filtering by MCTF 406, video contents have changed especially when the video has certain level of noise. Applying same delta QPs to a frame with and without MCTF filter (e.g., MCTF 406 being on or off) is not optimal for encoder performance.

To address at least one of the potential issues, look up table 530 being applied can be selected or determined based on whether MCTF on? 560, a signal which indicates whether MCTF 406 is on or off. Moreover, look up table 530 may have more four or more rows associating four or more different ranges of *E_{combined,i}* to different delta QP values. Two illustrative look up tables are as follows:

**Table 2: Exemplary delta QP look up table to be used when MCTF is on, the look up table associating different ranges of E_{combined,i} to different delta QP values**

| *E_{combined,i}* | Delta QP |
|---|---|
| 0-2 | -4 |
| 3-9 | -3 |
| 10-24 | -2 |
| 25-49 | -1 |
| 50-99 | 0 |
| 100-149 | +1 |
| 150-399 | +2 |
| 400-999 | +3 |
| >999 | +4 |

**Table 3: Exemplary delta QP look up table to be used when MCTF is off, the look up table associating different ranges of E_{combined,i} to different delta QP values**

| *E_{combined,i}* | Delta QP |
|---|---|
| 0-2 | -4 |
| 3-7 | -3 |
| 8-19 | -2 |
| 20-49 | -1 |
| 50-99 | 0 |
| 80-199 | +1 |
| 200-499 | +2 |
| 500-999 | +3 |
| >999 | +4 |

In contrast, applying look up table illustrated in table 1 compares *E_{combined,i}* with 4 thresholds to derive delta QPs. Therefore, the look up table has 5 rows associating 5 different ranges of *E_{combined,i}* to different delta QP values (where the delta QP range is [-2, +2]). Applying look up Table illustrated in Table 2 and Table 3 compares *E_{combined,i}* with 8 thresholds to derive delta QPs. Therefore, the look up table has 9 rows associating 9 different ranges of *E_{combined,i}* to different delta QP values (where the delta QP range is [-4, +4]).

In some embodiments, applying look up table 530 to determine dQP 532 can include comparing the combined distortion metric *E_{combined,i}* against four or more thresholds corresponding to different values for dQP 532 to set dQP 532 accordingly. In some embodiments, applying look up table 530 to determine dQP 532 can include comparing the combined distortion metric *E_{combined,i}* against more than four thresholds corresponding to different values for dQP 532 to set dQP 532 accordingly.

MCTF on? 560 signal may cause different look up tables (e.g., different sets of thresholds) to be applied as look up table 530. MCTF on? 560 signal may select one of the available look up tables, such as one of Table 2 and Table 3, to be used as look up table 530 when determining a value for dQP 532. Table 2 reflects a more aggressive QP adjustment, whereas Table 3 reflects a more conservative QP adjustment. Applying different QP adjustments depending on MCTF is on or off can make block QP adaptation system 444 perform better. Application of MCTF changes the content being encoded, and how QP is to be adjusted can be done differently depending on whether MCTF is applied (e.g., how QP is to be adjusted responds to the MCTF processing upstream). Though the calculation of the combined distortion metric *E_{combined,i}* is same, and both based on the original video, the QP adjustment according to dQP 532 occurs inside the encoder which is after MCTF 406 and block QP adaptation system 444. With the same combined distortion metric *E_{combined,i},* in case of MCTF being on, because the current frame is filtered with neighbor frames, the correlation between frames is bigger than when MCTF is off and the importance of the same block is higher than that in MCTF off case. More aggressive delta QP adjustment can be made when MCTF is on. More aggressive delta QP adjustment means using higher absolute values for dQP 532 for a bigger lower end range of the combined distortion metric *E_{combined,i}* and a bigger higher end range of the combined distortion metric *E_{combined,i},* Less aggressive delta QP adjustment can be made when MCTF is off. Less aggressive delta QP adjustmen means using lower absolute values for dQP 532 for a smaller lower end range of the combined distortion metric *E_{combined,i}* and a smaller higher end range of the combined distortion metric *E_{combined,i},* A higher absolute value for dQP 532 is used when the distortion metric *E_{combined,i}* is very low, or very high.

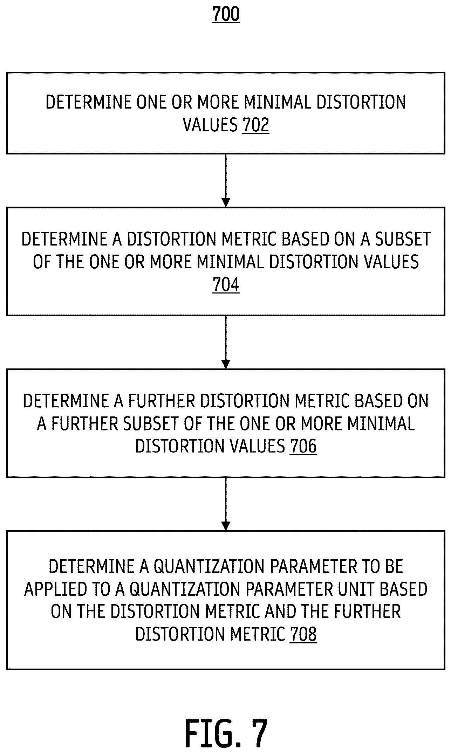

FIG. 7 is a flow diagram illustrating method 700 for determining a quantization parameter to be applied to a quantization parameter unit, according to some embodiments of the disclosure. Method 700 may be performed by block QP adaptation system 444 of FIG. 4.

In 702, one or more minimal distortion values are determined based on one or more filtering distortion values calculated for a block of a video frame.

In 704, a distortion metric is determined for a quantization parameter unit comprising at least the block. The distortion metric is based on a subset of the one or more minimal distortion values for the block.

In 706, a further distortion metric is determined for the quantization parameter unit. The further distortion metric is based on a further subset of the one or more minimal distortion values for the block.

In 708, a quantization parameter to be applied to the quantization parameter unit is determined based on the distortion metric and the further distortion metric.

In some embodiments, the one or more minimal distortion values comprise one or more of a forward minimal distortion value, a further forward minimal distortion value, a backward minimal distortion value, and a further backward minimal distortion value.

In some embodiments, the subset of the one or more minimal distortion values comprises one or more of the forward minimal distortion value and the backward minimal distortion value.

In some embodiments, the further subset of the subset of the one or more minimal distortion values comprises one or more of the further forward minimal distortion value and the further backward minimal distortion value.

### Exemplary computing device

FIG. 8 is a block diagram of an apparatus or a system, e.g., an exemplary computing device 800, according to some embodiments of the disclosure. One or more computing devices 800 may be used to implement the functionalities described with the FIGS. and herein. A number of components are illustrated in FIG. 8 can be included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, and the computing device 800 may include interface circuitry for coupling to the one or more components. For example, the computing device 800 may not include a display device 806, and may include display device interface circuitry (e.g., a connector and driver circuitry) to which a display device 806 may be coupled. In another set of examples, the computing device 800 may not include an audio input device 818 or an audio output device 808 and may include audio input or output device interface circuitry (e.g., connectors and supporting circuitry) to which an audio input device 818 or audio output device 808 may be coupled.

The computing device 800 may include a processing device 802 (e.g., one or more processing devices, one or more of the same type of processing device, one or more of different types of processing device). The processing device 802 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 802 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 804 includes one or more non-transitory computer-readable storage media. In some embodiments, memory 804 may include memory that shares a die with the processing device 802.

In some embodiments, memory 804 includes one or more non-transitory computer-readable media storing instructions executable to perform operations described herein, such as operations illustrated in FIGS. 1-6, and method 700. In some embodiments, memory 804 includes one or more non-transitory computer-readable media storing instructions executable to perform one or more operations of encoder 102. In some embodiments, memory 804 includes one or more non-transitory computer-readable media storing instructions executable to perform one or more operations of pre-processing 290. In some embodiments, memory 804 includes one or more non-transitory computer-readable media storing instructions executable to perform one or more operations of block QP adaptation system 444. The instructions stored in memory 804 may be executed by processing device 802.

In some embodiments, memory 804 may store data, e.g., data structures, binary data, bits, metadata, files, blobs, etc., as described with the FIGS. and herein. Memory 804 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 804 may include one or more non-transitory computer-readable media storing one or more of: data received and/or data generated by pre-processing 290. Memory 804 may include one or more non-transitory computer-readable media storing one or more of: data received and/or data generated by block QP adaptation system 444. Memory 804 may include one or more non-transitory computer-readable media storing one or more of: data received and/or data generated by method 700 of FIG. 7.

In some embodiments, the computing device 800 may include a communication device 812 (e.g., one or more communication devices). For example, the communication device 812 may be configured for managing wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 812 may operate in accordance with other wireless protocols in other embodiments. The computing device 800 may include an antenna 822 to facilitate wireless communications and/or to receive other wireless communications (such as radio frequency transmissions). Computing device 800 may include receiver circuits and/or transmitter circuits. In some embodiments, the communication device 812 may manage wired communications, such as electrical, optical, or any other suitable communication protocols (e.g., the Ethernet). As noted above, the communication device 812 may include multiple communication chips. For instance, a first communication device 812 may be dedicated to shorter-range wireless communications such as Wi-Fi or Bluetooth, and a second communication device 812 may be dedicated to longer-range wireless communications such as global positioning system (GPS), EDGE, GPRS, CDMA, WiMAX, LTE, EV-DO, or others. In some embodiments, a first communication device 812 may be dedicated to wireless communications, and a second communication device 812 may be dedicated to wired communications.

The computing device 800 may include power source / power circuitry 814. The power source / power circuitry 814 may include one or more energy storage devices (e.g., batteries or capacitors) and/or circuitry for coupling components of the computing device 800 to an energy source separate from the computing device 800 (e.g., DC power, AC power, etc.).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include a sensor 830 (or one or more sensors). The computing device 800 may include corresponding interface circuitry, as discussed above). Sensor 830 may sense physical phenomenon and translate the physical phenomenon into electrical signals that can be processed by, e.g., processing device 802. Examples of sensor 830 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 800 may include another output device 810 (or corresponding interface circuitry, as discussed above). Examples of the other output device 810 may include an audio codec, a video codec, a printer, a wired or wireless transmitter for providing information to other devices, haptic output device, gas output device, vibrational output device, lighting output device, home automation controller, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 800 may be any other electronic device that processes data.

### Select examples

Example 1 provides a method, including determining one or more minimal distortion values based on one or more filtering distortion values calculated for a block of a video frame; determining a distortion metric for a quantization parameter unit including at least the block, the distortion metric being based on a subset of the one or more minimal distortion values for the block; determining a further distortion metric for the quantization parameter unit, the further distortion metric being based on a further subset of the one or more minimal distortion values for the block; and determining a quantization parameter to be applied to the quantization parameter unit based on the distortion metric and the further distortion metric.

Example 2 provides the method of example 1, where the one or more minimal distortion values include one or more of a forward minimal distortion value, a further forward minimal distortion value, a backward minimal distortion value, and a further backward minimal distortion value.

Example 3 provides the method of example 2, where the subset of the one or more minimal distortion values includes one or more of the forward minimal distortion value and the backward minimal distortion value.

Example 4 provides the method of example 2 or 3, where the further subset of the subset of the one or more minimal distortion values includes one or more of the further forward minimal distortion value and the further backward minimal distortion value.

Example 5 provides the method of any one of examples 2-4, where: the forward minimal distortion value is a lowest filtering distortion value of the one or more filtering distortion values calculated for the block in a forward direction; and the further forward minimal distortion value is a second lowest filtering distortion value of the one or more filtering distortion values calculated for the block in the forward direction.

Example 6 provides the method of any one of examples 2-5, where: the backward minimal distortion value is a lowest filtering distortion value of the one or more filtering distortion values calculated for the block in a backward direction; and the further backward minimal distortion value is a second lowest filtering distortion value of the one or more filtering distortion values calculated for the block in the backward direction.

Example 7 provides the method of any one of examples 1-6, further including determining the one or more filtering distortion values for the block based on a sum of squared difference between the block and a motion compensated block and a variance of the block.

Example 8 provides the method of any one of examples 1-7, where the one or more filtering distortion values are calculated for the block by a motion compensated temporal filter.

Example 9 provides the method of any one of examples 1-8, where determining the distortion metric for the quantization parameter unit includes determining a minimum of the subset of the one or more minimal distortion values for the block; and determining an average of one or more minimums determined for one or more blocks of the quantization parameter unit, the one or more minimums including the minimum determined for the block.

Example 10 provides the method of any one of examples 1-9, where determining the further distortion metric for the quantization parameter unit includes determining a further minimum of the further subset of the one or more minimal distortion values; and determining a further average of one or more further minimums determined for one or more blocks of the quantization parameter unit, the one or more further minimums including the further minimum determined for the block.

Example 11 provides the method of any one of examples 1-8, where determining the distortion metric for the quantization parameter unit includes determining an average of one or more subsets of the one or more minimal distortion values determined for one or more blocks of the quantization parameter unit, the one or more subsets including the subset of the one or more minimal distortion values for the block.

Example 12 provides the method of any one of examples 1-9, where determining the further distortion metric for the quantization parameter unit includes determining an average of one or more further subsets of the one or more minimal distortion values determined for one or more blocks of the quantization parameter unit, the one or more further subsets including the further subset of the one or more minimal distortion values for the block.

Example 13 provides the method of any one of example 1-12, further including determining a combined distortion metric for the quantization parameter unit based on the distortion metric and the further distortion metric; where the quantization parameter is determined based on the combined distortion metric.

Example 14 provides the method of any one of example 1-13, further including determining an average based on at least the subset of the one or more minimal distortion values; determining a variance of one or more averages determined for one or more blocks of a macroblock, the one or more averages including the average determined for the block; and determining a size of the quantization parameter unit based on the variance.

Example 15 provides the method of example 14, where determining the size of the quantization parameter unit includes comparing the variance against one or more thresholds corresponding to one or more sizes of the quantization parameter unit.

Example 16 provides the method of any one of examples 1-15, where determining the quantization parameter includes determining a combined distortion metric the quantization parameter unit based on the distortion metric and the further distortion metric; and comparing the combined distortion metric against more than four thresholds.

Example 17 provides the method of example 16, further including determining the more than four thresholds based on whether motion compensated temporal filtering is on or off.

Example 18 provides the method of any one of examples 1-15, where determining the quantization parameter includes determining a combined distortion metric the quantization parameter unit based on the distortion metric and the further distortion metric; and comparing the combined distortion metric against four or more thresholds.

Example 19 provides the method of example 18, further including determining the four or more thresholds based on whether motion compensated temporal filtering is on or off.

Example 20 provides one or more non-transitory computer-readable media storing instructions that, when executed by one or more processors, cause the one or more processors to: determine one or more minimal distortion values based on one or more filtering distortion values calculated for a block of a video frame; determine a distortion metric for a quantization parameter unit including at least the block, the distortion metric being based on a subset of the one or more minimal distortion values for the block; determine a further distortion metric for the quantization parameter unit, the further distortion metric being based on a further subset of the one or more minimal distortion values for the block; and determine a quantization parameter to be applied to the quantization parameter unit based on the distortion metric and the further distortion metric.

Example 21 provides the one or more non-transitory computer-readable media of example 20, where the one or more minimal distortion values include one or more of a forward minimal distortion value, a further forward minimal distortion value, a backward minimal distortion value, and a further backward minimal distortion value.

Example 22 provides the one or more non-transitory computer-readable media of example 21, where the subset of the one or more minimal distortion values includes one or more of the forward minimal distortion value and the backward minimal distortion value.

Example 23 provides the one or more non-transitory computer-readable media of example 21 or 22, where the further subset of the subset of the one or more minimal distortion values includes one or more of the further forward minimal distortion value and the further backward minimal distortion value.

Example 24 provides the one or more non-transitory computer-readable media of any one of examples 21-23, where: the forward minimal distortion value is a lowest filtering distortion value of the one or more filtering distortion values calculated for the block in a forward direction; and the further forward minimal distortion value is a second lowest filtering distortion value of the one or more filtering distortion values calculated for the block in the forward direction.

Example 25 provides the one or more non-transitory computer-readable media of any one of examples 21-24, where: the backward minimal distortion value is a lowest filtering distortion value of the one or more filtering distortion values calculated for the block in a backward direction; and the further backward minimal distortion value is a second lowest filtering distortion value of the one or more filtering distortion values calculated for the block in the backward direction.

Example 26 provides the one or more non-transitory computer-readable media of any one of examples 20-25, where the instructions further cause the one or more processors to: determine the one or more filtering distortion values for the block based on a sum of squared difference between the block and a motion compensated block and a variance of the block.

Example 27 provides the one or more non-transitory computer-readable media of any one of examples 20-26, where the one or more filtering distortion values are calculated for the block by a motion compensated temporal filter.

Example 28 provides the one or more non-transitory computer-readable media of any one of examples 20-27, where determining the distortion metric for the quantization parameter unit includes determining a minimum of the subset of the one or more minimal distortion values for the block; and determining an average of one or more minimums determined for one or more blocks of the quantization parameter unit, the one or more minimums including the minimum determined for the block.

Example 29 provides the one or more non-transitory computer-readable media of any one of examples 20-28, where determining the further distortion metric for the quantization parameter unit includes determining a further minimum of the further subset of the one or more minimal distortion values; and determining a further average of one or more further minimums determined for one or more blocks of the quantization parameter unit, the one or more further minimums including the further minimum determined for the block.

Example 30 provides the one or more non-transitory computer-readable media of any one of examples 20-27, where determining the distortion metric for the quantization parameter unit includes determining an average of one or more subsets of the one or more minimal distortion values determined for one or more blocks of the quantization parameter unit, the one or more subsets including the subset of the one or more minimal distortion values for the block.

Example 31 provides the one or more non-transitory computer-readable media of any one of examples 20-28, where determining the further distortion metric for the quantization parameter unit includes determining an average of one or more further subsets of the one or more minimal distortion values determined for one or more blocks of the quantization parameter unit, the one or more further subsets including the further subset of the one or more minimal distortion values for the block.

Example 32 provides the one or more non-transitory computer-readable media of any one of example 20-31, where the instructions further cause the one or more processors to: determine a combined distortion metric for the quantization parameter unit based on the distortion metric and the further distortion metric; where the quantization parameter is determined based on the combined distortion metric.

Example 33 provides the one or more non-transitory computer-readable media of any one of example 20-32, where the instructions further cause the one or more processors to: determine an average based on at least the subset of the one or more minimal distortion values; determine a variance of one or more averages determined for one or more blocks of a macroblock, the one or more averages including the average determined for the block; and determine a size of the quantization parameter unit based on the variance.

Example 34 provides the one or more non-transitory computer-readable media of example 33, where determining the size of the quantization parameter unit includes comparing the variance against one or more thresholds corresponding to one or more sizes of the quantization parameter unit.

Example 35 provides the one or more non-transitory computer-readable media of any one of examples 20-34, where determining the quantization parameter includes determining a combined distortion metric the quantization parameter unit based on the distortion metric and the further distortion metric; and comparing the combined distortion metric against more than four thresholds.

Example 36 provides the one or more non-transitory computer-readable media of example 35, where the instructions further cause the one or more processors to: determine the more than four thresholds based on whether motion compensated temporal filtering is on or off.

Example 37 provides the one or more non-transitory computer-readable media of any one of examples 20-34, where determining the quantization parameter includes determining a combined distortion metric the quantization parameter unit based on the distortion metric and the further distortion metric; and comparing the combined distortion metric against four or more thresholds.

Example 38 provides the one or more non-transitory computer-readable media of example 37, where the instructions further cause the one or more processors to: determine the four or more thresholds based on whether motion compensated temporal filtering is on or off.

Example 39 provides an apparatus, including one or more processors; and one or more non-transitory computer-readable media storing instructions that, when executed by the one or more processors, cause the one or more processors to: determine one or more minimal distortion values based on one or more filtering distortion values calculated for a block of a video frame; determine a distortion metric for a quantization parameter unit including at least the block, the distortion metric being based on a subset of the one or more minimal distortion values for the block; determine a further distortion metric for the quantization parameter unit, the further distortion metric being based on a further subset of the one or more minimal distortion values for the block; and determine a quantization parameter to be applied to the quantization parameter unit based on the distortion metric and the further distortion metric.

Example 40 provides the apparatus of example 39, where the one or more minimal distortion values include one or more of a forward minimal distortion value, a further forward minimal distortion value, a backward minimal distortion value, and a further backward minimal distortion value.

Example 41 provides the apparatus of example 40, where the subset of the one or more minimal distortion values includes one or more of the forward minimal distortion value and the backward minimal distortion value.

Example 42 provides the apparatus of example 40 or 41, where the further subset of the subset of the one or more minimal distortion values includes one or more of the further forward minimal distortion value and the further backward minimal distortion value.

Example 43 provides the apparatus of any one of examples 40-42, where: the forward minimal distortion value is a lowest filtering distortion value of the one or more filtering distortion values calculated for the block in a forward direction; and the further forward minimal distortion value is a second lowest filtering distortion value of the one or more filtering distortion values calculated for the block in the forward direction.

Example 44 provides the apparatus of any one of examples 40-43, where: the backward minimal distortion value is a lowest filtering distortion value of the one or more filtering distortion values calculated for the block in a backward direction; and the further backward minimal distortion value is a second lowest filtering distortion value of the one or more filtering distortion values calculated for the block in the backward direction.

Example 45 provides the apparatus of any one of examples 39-44, where the instructions further cause the one or more processors to: determine the one or more filtering distortion values for the block based on a sum of squared difference between the block and a motion compensated block and a variance of the block.

Example 46 provides the apparatus of any one of examples 39-45, where the one or more filtering distortion values are calculated for the block by a motion compensated temporal filter.

Example 47 provides the apparatus of any one of examples 39-46, where determining the distortion metric for the quantization parameter unit includes determining a minimum of the subset of the one or more minimal distortion values for the block; and determining an average of one or more minimums determined for one or more blocks of the quantization parameter unit, the one or more minimums including the minimum determined for the block.

Example 48 provides the apparatus of any one of examples 39-47, where determining the further distortion metric for the quantization parameter unit includes determining a further minimum of the further subset of the one or more minimal distortion values; and determining a further average of one or more further minimums determined for one or more blocks of the quantization parameter unit, the one or more further minimums including the further minimum determined for the block.

Example 49 provides the apparatus of any one of examples 39-46, where determining the distortion metric for the quantization parameter unit includes determining an average of one or more subsets of the one or more minimal distortion values determined for one or more blocks of the quantization parameter unit, the one or more subsets including the subset of the one or more minimal distortion values for the block.

Example 50 provides the apparatus of any one of examples 39-47, where determining the further distortion metric for the quantization parameter unit includes determining an average of one or more further subsets of the one or more minimal distortion values determined for one or more blocks of the quantization parameter unit, the one or more further subsets including the further subset of the one or more minimal distortion values for the block.

Example 51 provides the apparatus of any one of example 39-50, where the instructions further cause the one or more processors to: determine a combined distortion metric for the quantization parameter unit based on the distortion metric and the further distortion metric; where the quantization parameter is determined based on the combined distortion metric.

Example 52 provides the apparatus of any one of example 39-51, where the instructions further cause the one or more processors to: determine an average based on at least the subset of the one or more minimal distortion values; determine a variance of one or more averages determined for one or more blocks of a macroblock, the one or more averages including the average determined for the block; and determine a size of the quantization parameter unit based on the variance.

Example 53 provides the apparatus of example 52, where determining the size of the quantization parameter unit includes comparing the variance against one or more thresholds corresponding to one or more sizes of the quantization parameter unit.

Example 54 provides the apparatus of any one of examples 39-53, where determining the quantization parameter includes determining a combined distortion metric the quantization parameter unit based on the distortion metric and the further distortion metric; and comparing the combined distortion metric against more than four thresholds.

Example 55 provides the apparatus of example 54, where the instructions further cause the one or more processors to: determine the more than four thresholds based on whether motion compensated temporal filtering is on or off.

Example 56 provides the apparatus of any one of examples 39-53, where determining the quantization parameter includes determining a combined distortion metric the quantization parameter unit based on the distortion metric and the further distortion metric; and comparing the combined distortion metric against four or more thresholds.

Example 57 provides the apparatus of example 56, where the instructions further cause the one or more processors to: determine the four or more thresholds based on whether motion compensated temporal filtering is on or off.

Example A provides a computer program product comprising instructions, that when executed by a processor, causes the processor to perform a method of any one of examples 1-19.

Example B provides an apparatus comprising means for performing a method of any one of examples 1-19.

Example C provides a block QP adaptation system as described and illustrated herein.

Example D provides pre-processing as described and illustrated herein.

Example E provides a system having an encoder and pre-processing as described and illustrated herein.

Example F provides an apparatus comprising computing circuitry for performing a method of any one of examples 1-19.

### Variations and other notes

Although the operations of the example method shown in and described with reference to FIGS. 1-7 are illustrated as occurring once each and in a particular order, it will be recognized that some operations may be performed in any suitable order and repeated as desired. Additionally, one or more operations may be performed in parallel. Furthermore, the operations illustrated in FIGS. 1-7. may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
determining one or more minimal distortion values based on one or more filtering distortion values calculated for a block of a video frame;
determining a distortion metric for a quantization parameter unit comprising at least the block, the distortion metric being based on a subset of the one or more minimal distortion values for the block;
determining a further distortion metric for the quantization parameter unit, the further distortion metric being based on a further subset of the one or more minimal distortion values for the block; and
determining a quantization parameter to be applied to the quantization parameter unit based on the distortion metric and the further distortion metric.

2. The method of claim 1, wherein the one or more minimal distortion values comprise one or more of a forward minimal distortion value, a further forward minimal distortion value, a backward minimal distortion value, and a further backward minimal distortion value.

3. The method of claim 2, wherein the subset of the one or more minimal distortion values comprises one or more of the forward minimal distortion value and the backward minimal distortion value.

4. The method of claim 2 or 3, wherein the further subset of the subset of the one or more minimal distortion values comprises one or more of the further forward minimal distortion value and the further backward minimal distortion value.

5. The method of any one of claims 2-4, wherein:
the forward minimal distortion value is a lowest filtering distortion value of the one or more filtering distortion values calculated for the block in a forward direction; and
the further forward minimal distortion value is a second lowest filtering distortion value of the one or more filtering distortion values calculated for the block in the forward direction.

6. The method of any one of claims 2-5, wherein:
the backward minimal distortion value is a lowest filtering distortion value of the one or more filtering distortion values calculated for the block in a backward direction; and
the further backward minimal distortion value is a second lowest filtering distortion value of the one or more filtering distortion values calculated for the block in the backward direction.

7. The method of any one of claims 1-6, wherein determining the distortion metric for the quantization parameter unit comprises:
determining a minimum of the subset of the one or more minimal distortion values for the block; and
determining an average of one or more minimums determined for one or more blocks of the quantization parameter unit, the one or more minimums including the minimum determined for the block.

8. The method of any one of claims 1-7, wherein determining the further distortion metric for the quantization parameter unit comprises:
determining a further minimum of the further subset of the one or more minimal distortion values; and
determining a further average of one or more further minimums determined for one or more blocks of the quantization parameter unit, the one or more further minimums including the further minimum determined for the block.

9. The method of any one of claims 1-8, wherein determining the distortion metric for the quantization parameter unit comprises:
determining an average of one or more subsets of the one or more minimal distortion values determined for one or more blocks of the quantization parameter unit, the one or more subsets including the subset of the one or more minimal distortion values for the block.

10. The method of any one of claims 1-9, wherein determining the further distortion metric for the quantization parameter unit comprises:
determining an average of one or more further subsets of the one or more minimal distortion values determined for one or more blocks of the quantization parameter unit, the one or more further subsets including the further subset of the one or more minimal distortion values for the block.

11. The method of any one of claims 1-10, further comprising:
determining a combined distortion metric for the quantization parameter unit based on the distortion metric and the further distortion metric;
wherein the quantization parameter is determined based on the combined distortion metric.

12. The method of any one of claims 1-11, wherein determining the quantization parameter comprises:
determining a combined distortion metric the quantization parameter unit based on the distortion metric and the further distortion metric; and
comparing the combined distortion metric against more than four thresholds.

13. The method of claim 12, further comprising:
determining the more than four thresholds based on whether motion compensated temporal filtering is on or off.

14. One or more non-transitory computer-readable media storing instructions that, when executed by one or more processors, cause the one or more processors to perform a method according to any one of claims 1-13.

15. An apparatus, comprising:
one or more processors; and
one or more non-transitory computer-readable media storing instructions that, when executed by the one or more processors, cause the one or more processors to perform a method according to any one of claims 1-13.
